# FASCICULE DE BREVET EUROPEEN

(11) **EP 2 360 095 B1**
(45) Date de publication et mention de la délivrance du brevet: **20.03.2013**
(21) Numéro de dépôt: 11000520.4
(22) Date de dépôt: 24.01.2011
(51) Int. Cl.: B64D 11/06, B64D 25/04

(54) **Siège de véhicule anti-crash**
Anti-crash Fahrzeugsitz
Anti-crash vehicle seat

(30) Priorité: 23.02.2010 FR 1000718
(43) Date de publication de la demande: 24.08.2011
(73) Titulaire: EUROCOPTER, 13725 Marignane Cédex (FR)
(72) Inventeur: Dock, Laurent, 13090 Aix en Provence (FR)
(74) Mandataire: GPI & Associés

(56) Documents cités:
- EP-A1- 0 682 191
- EP-A1- 2 113 457
- DE-A1-102008 056 661
- US-A- 4 523 730
- US-A1- 2008 015 753

## Description

La présente invention est notamment du domaine des appareils volants motorisés, avions et giravions notamment, et plus particulièrement du domaine des accessoires équipant de tels appareils. Elle a pour objet un siège anti-crash de véhicule notamment pour appareils volants motorisés. Ce siège intègre des moyens de protection des passagers en cas de chocs violents et/ou d'un brusque changement d'allure de l'appareil, notamment lors d'un crash.

Les sièges pour appareils volants motorisés tels qu'avions, giravions et plus particulièrement les hélicoptères ou appareils volants motorisés analogues, intègrent des moyens de protection des passagers installés sur les sièges en cas de crash. On comprendra par passager tout individu embarqué sur l'appareil, qu'il soit pilote ou personne transportée. De tels moyens de protection sont couramment constitués de moyens d'absorption d'énergie qui sont aptes à compenser les contraintes subies par le siège lorsqu'il est soumis à des chocs violents et/ou à une brusque décélération, notamment en cas de crash.

Selon une forme commune de réalisation, le siège associe un châssis et un baquet composé d'une assise rehaussée d'un dossier. Le châssis est ancré au plancher de l'appareil par l'intermédiaire de longerons, et comporte des montants en élévation qui sont solidaires des longerons et qui sont conjointement porteurs du baquet.

Selon le document EP0814020, un siège anti-crash d'un véhicule comprend un baquet et un châssis pour lier le baquet au plancher du véhicule, le baquet étant pourvu d'une assise et d'un dossier pour accueillir un individu.

Le châssis est muni d'un premier et d'un deuxième pieds prolongés chacun par un montant en élévation de soutien muni d'une nervure. De plus, le siège est pourvu d'un élément de fixation par montant en élévation, supporté par le dossier du baquet. Par suite, chaque nervure est engagée dans un canal de l'élément de fixation associé, la portion de la nervure située au dessus de l'élément de fixation ayant une section transversale inférieure à la section de la portion de la nervure située au-dessous de cet élément de fixation.

Lors d'un crash du véhicule, un hélicoptère par exemple, la descente de ce véhicule est violemment et brusquement stoppée lors du contact du véhicule avec le sol. Du fait de son inertie, le baquet et l'individu assis sur ce baquet tendent à continuer leur descente et les éléments de fixation glissent le long des nervures qui remplissent alors le rôle de moyen de guidage. De plus, ces éléments de fixation rabotent la nervure lors de leur mouvement descendant ce qui permet à ladite nervure de remplir le rôle d'absorbeur d'énergie, en l'occurrence l'énergie provenant de l'énergie cinétique du baquet et de l'individu qui l'occupe.

Par conséquent, la décélération subie par le baquet et ledit individu est réduite de manière conséquente par l'intermédiaire des nervures des montants en élévation de soutien. Ce premier siège prévoit donc un moyen remplissant à la fois le rôle de moyen de guidage et de moyen d'absorption d'énergie, l'arrachement de matière de ce moyen d'absorption d'énergie s'avérant très efficace.

Néanmoins, suite au crash, il convient de remplacer les montants en élévation de soutien et les éléments de fixation ce qui induit un coût non négligeable.

On connaît par le document EP0078479 un deuxième siège anti-crash muni d'une première structure comportant un châssis et un baquet fixé au châssis. De plus, le deuxième siège est pourvu de deux colonnes aptes à être fixées à une ossature d'un véhicule.

Le châssis possède deux manchons, chaque manchon étant apte à coulisser sur chaque colonne. Ces colonnes remplissent alors le rôle de moyen de guidage.

Afin d'empêcher le coulissement des manchons en condition normale c'est-à-dire hors d'une situation de crash, le siège comporte une pluralité de barres fixées par leur extrémité supérieure à des chapiteaux agencés aux extrémités supérieures des colonnes. Plus précisément, le siège comprend un chapiteau par colonne, chaque chapiteau étant équipé de quatre barres. De plus, chaque colonne est entourée par une matrice d'étirage, elle-même entourée par un collier. Les barres d'une colonne traversent un passage d'étirage ménagé dans la matrice d'étirage de la colonne. On note que le diamètre de chaque barre en dessous de la matrice d'étirage est plus important que le diamètre du passage d'étirage.

Par suite, comme pour le premier siège, lors de la descente rapide du baquet provoquée par un crash ou un atterrissage dur, les barres sont déformées par la matrice d'étirage ce qui permet d'absorber une quantité d'énergie importante. A contrario, le moyen de guidage, à savoir les colonnes, est désormais dissocié du moyen d'absorption d'énergie, à savoir les barres. A l'issue de l'atterrissage dur, il convient juste de changer les barres et la matrice d'étirage ce qui permet de limiter les coûts.

Toutefois, ce remplacement implique pratiquement un démontage complet du siège. De plus, les coûts de fabrication du siège demeurent relativement importants du fait de tolérances de fabrication serrées.

Selon le document FR2930520, un siège anti-crash d'un véhicule comprend un baquet et un châssis pour lier le baquet au plancher du véhicule, le baquet étant pourvu d'une assise et d'un dossier pour accueillir un individu, le châssis étant muni d'un premier et d'un deuxième pieds aptes à être fixés au plancher de part et d'autre du baquet, ces premier et deuxième pieds étant liés mécaniquement à un premier et deuxième montants en élévation de soutien du dossier. De plus, ce siège comporte un moyen de soutien solidarisé aux premier et deuxième montants en élévation de soutien ainsi qu'un moyen de guidage en translation du baquet et un moyen d'absorption d'énergie distincts, les moyens de guidage et d'absorption d'énergie coopérant chacun avec un moyen de commande solidaire du dossier du baquet du siège, le moyen de guidage coopérant avec le moyen de commande pour guider en translation le déplacement du baquet dans une direction prédéterminée lors d'un crash, le moyen d'absorption d'énergie coopérant avec le moyen de commande et le moyen de soutien pour absorber l'énergie cinétique du siège afin de contrôler la décélération à laquelle est soumis l'individu assis sur le siège.

Par conséquent, durant un crash, le moyen d'absorption d'énergie est déformé, une partie de ce moyen d'absorption d'énergie étant maintenue fixement par le moyen de soutien alors que le moyen de commande tire sur une autre portion du moyen d'absorption d'énergie. La déformation élastique ou plastique du moyen d'absorption d'énergie lui confère alors un pouvoir d'absorption d'énergie.

Ce siège permet donc de protéger l'individu assis en cas de crash vertical.

Par ailleurs, sur un giravion est notamment un hélicoptère, le siège est fortement sollicité en terme de vibrations. Dès lors, l'assisse du siège est généralement recouverte de mousse de garnissage pour limiter les sollicitations vibratoires.

Ainsi, le siège comporte un moyen d'absorption d'énergie de crash et un moyen antivibratoire, à savoir la mousse. On comprend que l'on entend dans l'ensemble de la description par « moyen d'absorption d'énergie » un moyen apte à absorber l'énergie résultant d'une forte accélération ou décélération lors d'un crash pour notamment protéger les lombaires d'un individu et par « moyen antivibratoire » un moyen permettant d'éviter la transmission des vibrations du véhicule audit individu pour optimiser son confort.

Bien qu'efficace, si le moyen antivibratoire est peu sollicité par le poids du passager, le moyen d'absorption d'énergie de crash est activé uniquement après consommation de la course résiduelle du moyen d'absorption de vibrations. En d'autres termes, au moment du crash, l'individu se déplace en sollicitant le moyen antivibratoire c'est-à-dire en écrasant la mousse. Cet individu est donc soumis à une augmentation de vitesse avant de solliciter le moyen d'absorption d'énergie de crash. Lors du crash, le mouvement translatif de l'individu est brusquement arrêté. Il en résulte un pic d'efforts lombaires au moment de la sollicitation du moyen d'absorption d'énergie de crash. En accord avec les exigences de certification et notamment le règlement connu sous la dénomination « FAR part 29 » applicable aux giravions, le pic d'effort est acceptable tant qu'il demeure en dessous d'un pic maximal.

Les constructeurs prennent donc en considération ce pic maximal, pour dimensionner la mousse par exemple.

Le document US 3420475 présente un siège muni d'un piston apte à coulisser dans un premier cylindre faisant office de moyen antivibratoire, ce premier cylindre étant disposé dans un deuxième cylindre remplissant le rôle de moyen d'absorption d'énergie de crash. Bien que séduisante, cette solution est aussi susceptible de générer un pic d'effort lombaire qu'il convient de maintenir dans une limite acceptable.

Le document FR 2397981 propose un siège fixé à deux coulisseaux par une pluralité d'amortisseurs, chaque coulisseau étant agencé sur un rail fixé à un plancher. De plus, la liaison entre un amortisseur et un coulisseau comporte un moyen antivibratoire muni d'un bloc comportant un élément en matière élastique combiné avec une monture. Ce dispositif est susceptible de ne pas générer de pics d'effort lombaire mais présente les inconvénients d'être relativement encombrant et lourd.

Enfin, on note que le document US 4003534 décrit un siège muni de moyens pour lutter contre des vibrations latérales, à opposer à des vibrations dites verticales dirigées selon une direction sensiblement parallèle au dossier du siège.

L'état de la technique inclut de plus les documents US 2008/015753, US 4 523 730, EP 2 113 457, EP 0 682 191, et DE 10 2008 056661.Le document US 2008/015753 , qui est considéré l'état de la technique plus proche, prévoit notamment un moyen antivibratoire fixé à une base, le moyen antivibratoire coopérant avec un moyen de désolidarisation du moyen antivibratoire de ladite base.

La présente invention a alors pour objet de proposer un siège de véhicule apte à assurer une fonction antivibratoire et une fonction anti-crash sans engendrer des pics d'effort lombaire ou à minima en engendrant un pic d'effort lombaire parfaitement maitrisé, ce siège devant de plus avoir un encombrement et une masse optimisés.

Selon l'invention, un siège anti-crash d'un véhicule comprend un baquet et un châssis fixé à un plancher pour porter ledit baquet, le baquet étant pourvu d'une assise et d'un dossier pour accueillir un individu, le siège comprenant un moyen d'absorption d'énergie de crash et un moyen antivibratoire. Le moyen d'absorption d'énergie est notamment apte à absorber l'énergie résultant du crash par déformation plastique ou élastique d'un organe par exemple lorsque le baquet se rapproche du plancher, selon une direction de guidage du baquet éventuellement parallèle au dossier. On comprend que l'on appelle « direction de guidage » la direction suivie par le baquet, éventuellement sous l'effet de moyen de guidage du siège.

Ce siège est notamment remarquable en ce qu'il comporte un moyen d'inhibition du moyen antivibratoire neutralisant le moyen antivibratoire lorsque le baquet subit une accélération supérieure à un seuil prédéterminé en se rapprochant du plancher.

Une telle accélération est parfois dénommée « accélération vers le bas ».

Ainsi, le baquet est suspendu au châssis via au moins le moyen d'absorption d'énergie de crash, du type présenté dans le document FR 2 930 613 par exemple, le châssis étant fixé à un plancher tel qu'un plancher d'aéronef de type giravion. La déformation élastique ou plastique du moyen d'absorption d'énergie lui confère alors un pouvoir d'absorption d'énergie.

De plus, lorsque l'accélération du baquet en se rapprochant du plancher est en dessous du seuil prédéterminé, le moyen antivibratoire filtre les vibrations transmises par le plancher au siège pour améliorer le confort de l'individu assis sur ledit siège. Par contre, au dessus du seuil, le moyen d'inhibition inhibe le moyen antivibratoire.

Durant un crash, certains baquets de sièges classiques tendent à se déplacer puis sont bloqués brutalement ce qui engendre un pic d'effort lombaire, devant être inférieur à plusieurs milliers de newtons suivant la norme de certification connue sous la désignation « FAR 29 ». Plus précisément, on peut se référer au paragraphe 29.562 de cette norme de certification « FAR 29 ».

Or suivant l'invention, le baquet se déplace peu, voire ne se déplace pas préalablement à son blocage dans la mesure où le moyen antivibratoire est inhibé au moment du crash. L'invention permet alors d'assurer une fonction antivibratoire et une fonction anti-crash sans engendrer des pics d'effort lombaire, ou à minima en engendrant un pic d'effort maitrisé.

On note que le constructeur détermine le seuil prédéterminé à l'aide des normes à respecter.

Par exemple, les normes prévoient des niveaux de crash à respecter, une accélération vers le bas de 30g à 60° par rapport à l'horizontale suivant la FAR 29.562 (b) « g » désignant l'accélération de la pesanteur. Dès lors, le seuil prédéterminé est avantageusement ajusté en fonction de la géométrie du siège, des fréquences/amplitudes des vibrations à filtrer, de la géométrie du coussin d'assise, des performances de l'absorbeur d'énergie, par exemple à 4g. Dans ce cas, une accélération de 5g engendrant un rapprochement du baquet du plancher génère une inhibition du moyen antivibratoire.

Selon une autre méthode, il est concevable d'utiliser le pic maximal acceptable mentionné dans la FAR 29.562 c). le constructeur détermine alors par essais ou calculs la valeur de l'accélération du baquet engendrant un tel pic maximal, cette valeur étant le seuil prédéterminé à partir duquel on inhibe le moyen antivibratoire.

L'invention peut de plus comporter une ou plusieurs des caractéristiques additionnelles qui suivent.

Selon l'invention, le moyen d'absorption d'énergie comportant une première extrémité fixée au baquet et une deuxième extrémité mobile par rapport au châssis, le moyen d'inhibition est lié à la deuxième extrémité par un moyen de liaison pour bloquer cette deuxième extrémité lorsque le baquet subit une accélération supérieure au seuil prédéterminé en se rapprochant du plancher.

Ainsi, en bloquant la deuxième extrémité du moyen d'absorption d'énergie, le moyen d'inhibition empêche le baquet de se déplacer et inhibe de fait le moyen antivibratoire.

Il est à noter que le moyen d'inhibition est lié à la deuxième extrémité Indifféremment directement ou indirectement suivant le mode de réalisation.

L'invention peut de plus comporter une ou plusieurs des caractéristiques additionelles qui suivent.

Selon le premier mode de réalisation, le moyen antivibratoire et le moyen d'absorption d'énergie sont agencés en parallèle. Le moyen antivibratoire est alors d'une part fixé au baquet et d'autre part à un organe fixe par rapport à ce baquet à savoir indifféremment au châssis ou au plancher fixé à ce châssis par exemple.

Le moyen antivibratoire peut être de tout type, et éventuellement du type amortisseur à piston, amortisseur rotatif, tube de torsion, amortisseur magnétique, amortisseur électrique ou autres.

Par ailleurs, la deuxième extrémité du moyen d'absorption d'énergie est éventuellement suspendue à un lien du moyen de liaison, ce lien liant la deuxième extrémité au moyen d'inhibition. Au-delà du seuil prédéterminé, le moyen d'inhibition empêche tout mouvement de ce lien alors qu'en dessous du seuil prédéterminé, le lien est libre de se déplacer.

Selon un deuxième mode de réalisation, le moyen antivibratoire et le moyen d'absorption d'énergie sont agencés en série.

Le moyen antivibratoire est alors d'une part fixé à un organe fixe par rapport au baquet, à savoir indifféremment au châssis ou au plancher fixé à ce châssis, et d'autre part lié à la deuxième extrémité.

Ce moyen antivibratoire est plus particulièrement indifféremment soit lié directement à la deuxième extrémité soit lié indirectement à cette deuxième extrémité par un moyen de connexion.

Selon une variante préférée de ce deuxième mode de réalisation le moyen antivibratoire est lié directement à la deuxième extrémité. Le moyen antivibratoire est un moyen antivibratoire sollicité en torsion agencé sur le châssis et lié à la deuxième extrémité.

Le moyen antivibratoire peut être de tout type, et éventuellement de type amortisseur rotatif, tube de torsion, amortisseur magnétique, amortisseur électrique ou autres.

Selon une autre variante, le moyen antivibratoire est lié indirectement à la deuxième extrémité par un moyen de connexion. Le moyen antivibratoire est d'une part fixé à un organe fixe par rapport au baquet à savoir indifféremment au châssis ou au plancher fixé à ce châssis par exemple, et d'autre part lié à la deuxième extrémité par un moyen de connexion muni d'une poutre basculante articulée au châssis par une articulation. Cette articulation est agencée entre une première zone de la poutre et une deuxième zone de la poutre, la deuxième extrémité étant fixée à la première zone et le moyen antivibratoire étant fixé à ladite deuxième zone.

La poutre étant de plus un moyen de liaison du moyen d'inhibition à la deuxième extrémité, le moyen d'inhibition est fixé à la deuxième zone de la poutre.

Ainsi, en fonctionnement normal à savoir en dessous dudit seuil prédéterminé, la poutre bascule par rapport au châssis, le mouvement basculant de cette poutre étant amorti par le moyen antivibratoire.

Par contre, lorsqu'une accélération du baquet supérieure au seuil prédéterminé en se rapprochant du plancher est détectée, le moyen d'inhibition bloque le mouvement basculant de la poutre, et par suite le mouvement de la deuxième extrémité du moyen d'absorption d'énergie.

Quel que soit le mode de réalisation, le moyen d'inhibition peut comporter un enrouleur qui coopère avec un lien d'un moyen de liaison, le moyen d'inhibition comprenant un moyen de blocage de l'enrouleur lorsque le baquet subit une accélération supérieure à un seuil prédéterminé en se rapprochant du plancher.

Par exemple, le moyen d'inhibition peut être du type utilisé sur les ceintures de sécurité d'automobile en ayant une masse mobile apte à coopérer avec des dents de l'enrouleur.

Plus précisément, l'enrouleur comporte deux flasques dentés de part et d'autre d'un dévidoir autour duquel est enroulé le lien du moyen de liaison. De plus, il est pourvu d'une masse solidaire d'un moyen de blocage. A compter d'une accélération du baquet supérieure au seuil prédéterminé dirigée vers le plancher, la masse de déplace, ce qui provoque un déplacement du moyen de blocage contre les dents des flasques. L'enrouleur ne peut alors plus effectuer de rotation ce qui bloque le lien.

Selon une autre variante, l'enrouleur est muni d'un frein commandé par un processeur relié à un capteur de chocs. Lorsque le capteur mesure une accélération du baquet supérieure au seuil prédéterminé, le processeur ordonne le serrage du frein.

Le moyen d'inhibition peut être indifféremment fixé au châssis ou au plancher.

Outre un siège, l'invention a également pour objet un procédé pour protéger un individu assis sur un siège selon l'invention tel que décrit précédemment contre des vibrations et des chocs.

Au cours de ce procédé, on active le moyen antivibratoire en fonctionnement normal à savoir lorsque le baquet subit des accélérations inférieures au seuil prédéterminé en se rapprochant du plancher, et on inhibe le moyen antivibratoire lorsque le baquet de ce siège subit une accélération supérieure au seuil prédéterminé en se rapprochant du plancher afin de laisser agir uniquement le moyen d'absorption d'énergie de crash.

L'invention et ses avantages apparaîtront avec plus de détails dans le cadre de la description qui suit avec des exemples de réalisation donnés à titre illustratif en référence aux figures annexées qui représentent :
- la figure 1, une vue explicitant le fonctionnement de l'invention,
- la figure 2, une vue de côté présentant un moyen d'inhibition,
- la figure 3, une vue de dessus présentant un moyen d'inhibition,
- les figures 4 et 5, des vues présentant et explicitant un siège selon un premier mode de réalisation,
- la figure 6, une vue présentant une première variante d'un deuxième mode de réalisation, et
- les figures 7 et 8, des vues présentant une deuxième variante d'un deuxième mode de réalisation.

Les éléments présents dans plusieurs figures distinctes sont affectés d'une seule et même référence.

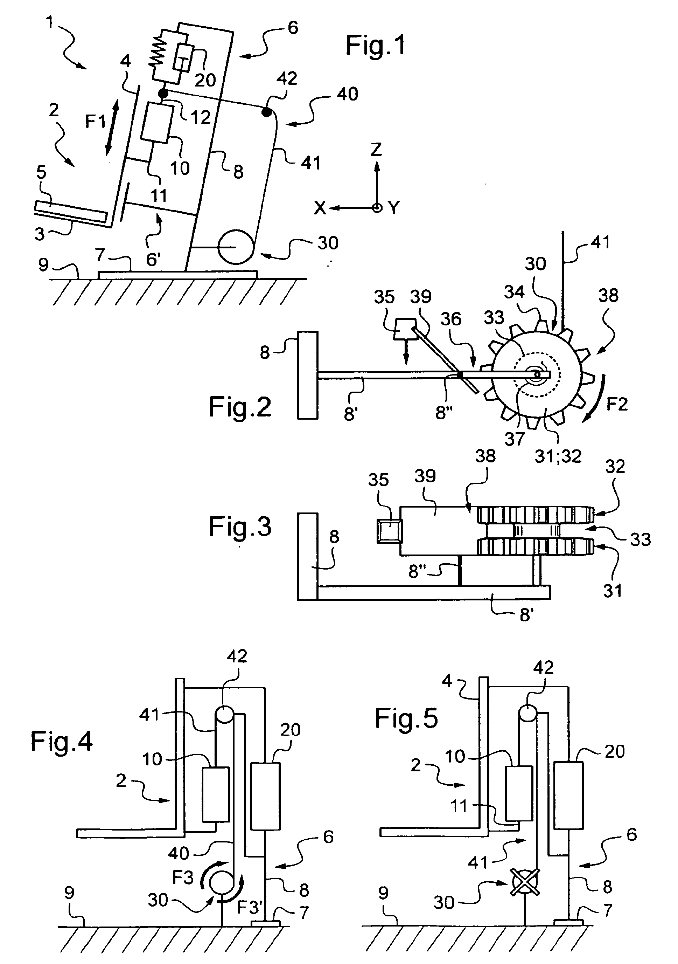

La figure 1 présente un siège 1 anti-crash d'un véhicule, et plus particulièrement un siège d'un aéronef de type giravion par exemple.

Ce siège 1 comporte un baquet 2 suspendu à un châssis 6 reposant sur le plancher 9 de l'aéronef. Ce baquet 2 se décompose en une assise 3 située sensiblement dans un premier plan X, Y et en un dossier 4 situé sensiblement dans un deuxième plan Y, Z. On note que les axes X, Y, Z définissant les premier et deuxième plans peuvent correspondre aux axes de référence de l'aéronef ou présentent une angulation avec ces axes de référence, le premier axe de référence correspondant à l'axe de roulis de l'aéronef, le deuxième axe de référence correspondant à l'axe de tangage de l'aéronef et le troisième axe de référence correspondant à l'axe de lacet de l'aéronef.

Le châssis 6 comprend par exemple un premier piétement 7 prolongé par un premier montant en élévation, 8, ainsi qu'un deuxième piétement prolongé par un deuxième montant en élévation non représenté sur la figure 1 par commodité.

Le baquet 2 est alors suspendu au châssis 6, et plus particulièrement au premier piétement 7 et au deuxième piétement. On note de plus que le châssis 6 peut être équipé d'un moyen de guidage 6' du baquet 2 par rapport au châssis 6 selon une direction de guidage.

Par ailleurs, le siège 1 est muni d'un moyen d'absorption d'énergie 10 de crash ainsi que d'un moyen antivibratoire 20 dissociés l'un de l'autre.

Le moyen d'absorption d'énergie 10 a pour fonction d'absorber l'énergie résultant d'un crash, et notamment d'une accélération du baquet supérieure à un seuil prédéterminé dirigée vers le plancher, ladite accélération étant parallèle à une direction de guidage du baquet. Ce moyen d'absorption est un moyen usuel s'étendant d'une première extrémité 11 solidaire du dossier 4 du baquet 2 vers une deuxième extrémité 12 mobile par rapport au châssis 6 en pouvant se déplacer conformément à la double flèche F1 selon une direction sensiblement parallèle au troisième axe Z.

Le moyen antivibratoire 20 a pour fonction de filtrer les vibrations transmises par le plancher 9 au baquet 2 par le châssis 6 selon une direction parallèle à la direction de guidage. Ce moyen antivibratoire 20 peut comporter un amortisseur à piston hydraulique ou pneumatique, un amortisseur électrique, un amortisseur rotatif, une barre de torsion, un ressort de torsion, un amortisseur magnétique, un ensemble muni d'un moyen élastique de type ressort en parallèle avec un amortisseur à piston par exemple ou tout autre type de moyen antivibratoire.

Le moyen d'amortissement est fixé à un organe fixe par rapport au baquet 2 à savoir indifféremment soit au plancher 9 soit au châssis 6 et par exemple à un montant en élévation 8 de ce châssis 6 conformément à la figure 1. De plus, en fonction du mode de réalisation, le moyen d'amortissement est soit fixé au baquet 2 soit à la deuxième extrémité 12 du moyen d'absorption d'énergie 10.

Par suite, le siège 6 comprend un moyen d'inhibition 30 pour neutraliser le moyen antivibratoire 20 quand le baquet 2 subit une accélération supérieure à un seuil prédéterminé en se rapprochant du plancher, à savoir durant un crash. On rappelle que les conditions de crash sont fixées par les autorités de certification, par exemple via le règlement de certification FAR 29. Par exemple, le seuil prédéterminé est favorablement fixé à 4g.

Le moyen d'inhibition 30 est ainsi relié à la deuxième extrémité 12 par un moyen de liaison 40, comportant par exemple un lien 41, une sangle coopérant éventuellement avec au moins un moyen de renvoi 42. De plus, en fonction de la variante, le moyen d'inhibition est fixé à un organe fixe par rapport au baquet 2 à savoir indifféremment soit au plancher 9 soit au châssis 6 et par exemple à un montant en élévation 8 de ce châssis 6 conformément à la figure 1

En fonctionnement normal à savoir lorsque le baquet subit une accélération inférieure au seuil prédéterminé par le constructeur en se rapprochant du plancher, les vibrations de l'aéronef engendrent une oscillation du baquet 2 et de la deuxième extrémité 12 du moyen d'absorption d'énergie 10 suivant la double flèche F1. Ce mouvement du baquet 2 est filtré par le moyen antivibratoire 20 qui tend à annuler lesdites vibrations pour améliorer le confort de l'individu assis sur le siège 1.

Dès lors, il n'est pas nécessaire de disposer une mousse ayant une épaisseur importante sur l'assise 3, une mousse 5 optionnelle de faible épaisseur étant suffisante pour garantir le confort. La mousse 5 permet en effet d'absorber les vibrations suivant un plan parallèle à l'assisse 3.

Lors d'un crash, le baquet subit une accélération supérieure au seuil prédéterminé par le constructeur en se rapprochant du plancher. Le moyen d'inhibition est alors activé pour bloquer le moyen de liaison 40 et par suite la deuxième extrémité 12. Dès lors, le baquet 2 sollicite le moyen d'absorption d'énergie 10 en éloignant la première extrémité 11 de la deuxième extrémité 12.

Le siège et l'individu ne s'étant pas déplacés préalablement à la sollicitation de ce moyen d'absorption d'énergie 10, l'individu ne ressent pas un pic d'effort lombaire important. On note que l'invention peut permettre un déplacement préalable de l'individu à l'origine d'un pic d'effort parfaitement maitrisé et autorisé par les autorités de certification.

La figure 2 présente une réalisation mécanique du moyen d'inhibition 30.

Ce moyen d'inhibition mécanique possède un enrouleur 38 pourvu par exemple de deux flasques périphériques 31, 32 munis chacun de dents 34 et entourant conjointement une portion centrale 33. On note que le deuxième flasque 32 et la portion centrale 33 sont visibles sur la figure 3.

L'enrouleur 38 est alors par exemple fixé au châssis 6, éventuellement via un bras de fixation 8' d'un montant en élévation 8.

De plus, l'enrouleur 38 peut comporter un ressort de rappel 37 tendant à faire tourner l'enrouleur 38 selon la flèche F2 pour tendre le lien 41 enroulé autour de la portion centrale 33.

Par ailleurs, le moyen d'inhibition est muni d'un moyen de blocage 36. Ce moyen de blocage comprend par exemple une première partie extrémale d'une barre 39 pivotant autour d'un point de pivotement 8" du bras de fixation 8', une deuxième partie extrémale de ladite barre 39 ayant une masse 35.

La figure 3 présente une vue de dessus d'un tel moyen d'inhibition.

En référence à la figure 2, lorsque le baquet subit une accélération supérieure au seuil prédéterminé en se rapprochant du plancher, la barre 39 pivote. Le moyen de blocage 36 vient s'intercaler entre deux dents adjacentes de chaque flasque 32, 33. L'enrouleur 38 et la deuxième extrémité sont alors bloqués dans une position donnée.

Ce blocage de la deuxième extrémité inhibe de fait le fonctionnement du moyen antivibratoire 20.

On comprend que d'autres moyens d'inhibition sont concevables. Ainsi, on peut prévoir un enrouleur muni d'un frein, ce frein étant commandé par un processeur en fonction d'un signal électrique provenant d'un capteur de chocs usuel.

Les figures 4 et 5 sont relatives à un premier mode de réalisation de l'invention.

Selon ce premier mode de réalisation, le moyen antivibratoire 20 est agencé en parallèle par rapport au moyen d'absorption d'énergie 10, le moyen antivibratoire 20 étant fixé au baquet 2 et à un organe fixe par rapport à ce baquet 2, en l'occurrence un montant en élévation 8 du châssis 6 sur l'exemple représenté.

De plus, la deuxième extrémité 12 est suspendue au lien 41 du moyen de liaison 40, ce lien passant autour d'un moyen de renvoi 42 du châssis 6.

En fonctionnement normal, lorsque le baquet tend à se rapprocher du plancher, la deuxième extrémité tire sur le lien 41, et déroule le lien 41 de l'enrouleur 38 du moyen d'inhibition 30 suivant la flèche F3', ce moyen d'inhibition étant fixé par ailleurs au plancher 9. Dans le même temps, le moyen antivibratoire 20 est sollicité en compression.

A l'inverse, quand le baquet tend à s'éloigner du plancher 9, la deuxième extrémité exerce une traction moindre sur le lien 41, l'enrouleur enroulant le lien 41 selon la flèche F3 pour le maintenir tendu. Dans le même temps, le moyen antivibratoire 20 est sollicité en extension.

En référence à la figure 5, à partir d'une accélération supérieure à un seuil prédéterminé du baquet dirigée vers le plancher, le moyen d'inhibition 30 se bloque. Par exemple, un moyen de blocage 36 bloque un enrouleur 38 du moyen d'inhibition. Il devient alors impossible de tirer sur le lien 41 ce qui bloque la deuxième extrémité dans une position donnée.

La translation du baquet 2 vers le plancher 9 entraîne ainsi une sollicitation du moyen d'absorption d'énergie 10, le dossier 4 tirant sur la première extrémité 11.

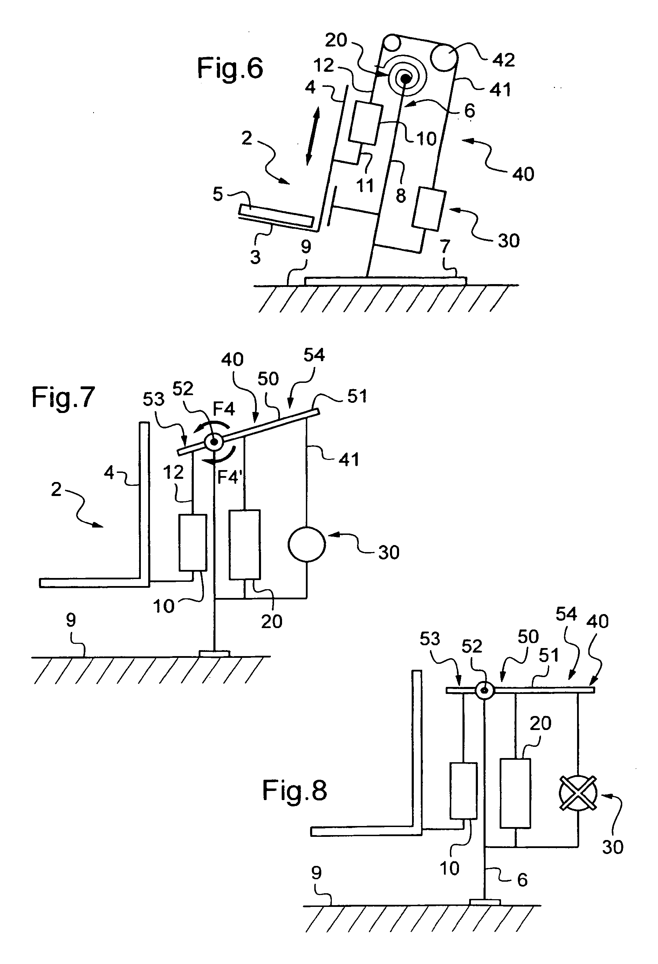

En référence aux figures 6 à 8, selon un deuxième mode de réalisation le moyen antivibratoire 20 est agencé en série par rapport au moyen d'absorption d'énergie 10, le moyen antivibratoire 20 étant d'une part fixé directement ou indirectement à la deuxième extrémité 12 et d'autre part à un organe fixe par rapport à ce baquet 2.

Selon la première variante de ce deuxième mode de réalisation représentée sur la figure 6, le moyen antivibratoire 20 est fixé directement à la deuxième extrémité 12 du moyen d'absorption d'énergie 10. Par exemple, le moyen antivibratoire 20 comporte un ressort d'une part agencé sur une barre de conjugaison reliant les premier et deuxième montants en élévation du châssis, et, d'autre part fixé à la deuxième extrémité 12.

Selon une variante équivalente non représentée, le moyen antivibratoire peut être une barre de torsion reliant les premier et deuxième montants en élévation du châssis, et, fixée à la deuxième extrémité 12.

En outre, la deuxième extrémité 12 est fixée à un lien 41 d'un moyen de liaison 40, ce moyen de liaison étant attaché à un moyen d'inhibition 30 fixé au châssis 6. On comprend que le moyen d'inhibition 30 peut être fixé en variante à tout organe fixe par rapport au baquet 2.

Selon la deuxième variante de ce deuxième mode de réalisation représentée sur la figure 6, le moyen antivibratoire 20 est fixé indirectement à la deuxième extrémité 12 du moyen d'absorption d'énergie 10 par un moyen de connexion 50.

Plus précisément, le moyen de connexion 50 est muni d'une poutre 51 s'étendant d'une première zone 53 vers une deuxième zone 54 de part et d'autre d'une articulation 52 au châssis 6.

La deuxième extrémité 12 du moyen d'absorption d'énergie 10 est alors fixée à la première zone 53, la deuxième zone 54 étant fixée au moyen antivibratoire 20 et à un lien 41 du moyen d'inhibition 30. Le moyen de liaison 40 du moyen d'inhibition 30 comprend alors successivement le lien 41 et la poutre 51.

En fonctionnement normal, lorsque le baquet tend à se rapprocher du sol, la deuxième extrémité tire sur la poutre 51 qui bascule selon la flèche F4. La deuxième zone 54 de la poutre 51 s'éloigne du plancher 9 et déroule le lien 41 de l'enrouleur du moyen d'inhibition 30. Dans le même temps, le moyen antivibratoire 20 est sollicité en extension.

A l'inverse, quand le baquet tend à s'éloigner du plancher 9, la deuxième extrémité exerce une traction moindre sur le lien 41, l'enrouleur enroulant le lien 41 pour le maintenir tendu. Dans le même temps, le moyen antivibratoire 20 est sollicité en compression.

En référence à la figure 8, à partir d'une accélération du baquet supérieure à un seuil prédéterminé, le moyen d'inhibition 30 se bloque. La poutre 51 ne peut plus basculer autour de l'articulation 52. La deuxième extrémité 12 est alors maintenue dans une position donnée, le baquet étirant alors le moyen d'absorption d'énergie 10 via la première extrémité de ce moyen d'absorption d'énergie 10.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Siège anti-crash (1) d'un véhicule comprenant un baquet (2) et un châssis (6) fixé à un plancher (9) pour porter ledit baquet (2), ledit baquet (2) étant pourvu d'une assise (3) et d'un dossier (4) pour accueillir un individu, ledit siège (1) comprend un moyen d'absorption d'énergie (10) de crash et un moyen antivibratoire (20),
**caractérisé en ce qu'**il comporte un moyen d'inhibition (30) dudit moyen antivibratoire (20) neutralisant le moyen antivibratoire lorsque le baquet (2) subit une accélération supérieure à un seuil prédéterminé en se rapprochant du plancher (9), ledit moyen d'absorption d'énergie (10) comporte une première extrémité (11) fixée au baquet (2) et une deuxième extrémité (12) mobile par rapport audit châssis (6), ledit moyen d'inhibition (30) est lié à ladite deuxième extrémité (12) par un moyen de liaison (40) pour bloquer cette deuxième extrémité (12) lorsque le baquet (2) subit une accélération supérieure audit seuil prédéterminé en se rapprochant du plancher.

2. Siège selon la revendication 1,
**caractérisé en ce que** ledit moyen antivibratoire (20) est d'une part fixé au baquet (2) et d'autre part à un organe fixe (9, 6) par rapport à ce baquet.

3. Siège selon la revendication 1,
**caractérisé en ce que** ladite deuxième extrémité (12) est suspendue à un lien (41) du moyen de liaison (40), ledit lien (41) liant la deuxième extrémité (12) au moyen d'inhibition (30).

4. Siège la revendication 1,
**caractérisé en ce que** ledit moyen antivibratoire (20) est d'une part fixé à un organe fixe (9, 6) par rapport au baquet (2) et d'autre part lié à une deuxième extrémité (12) du moyen d'absorption d'énergie (10).

5. Siège selon la revendication 4,
**caractérisé en ce que** ledit moyen antivibratoire (20) est indifféremment lié directement à la deuxième extrémité (12) ou lié indirectement à cette deuxième extrémité (12) par un moyen de connexion (50).

6. Siège selon l'une quelconque des revendications 4 à 5,
**caractérisé en ce que** ledit moyen antivibratoire (20) est un moyen antivibratoire sollicité en torsion (21) agencé sur ledit châssis (6) et lié à la deuxième extrémité (12).

7. Siège selon l'une quelconque des revendications 4 à 5,
**caractérisé en ce que** ledit moyen antivibratoire (20) est d'une part fixé à un organe fixe (9, 6) par rapport au baquet (2) et d'autre part lié à ladite deuxième extrémité (12) par une poutre (51) basculante d'un moyen de connexion (50) articulée au châssis (6) par une articulation (52), ladite articulation (52) étant agencée entre une première zone (53) de la poutre (51) et une deuxième zone (54) de la poutre (51), ladite deuxième extrémité (12) étant fixée à ladite première zone (53) et ledit moyen antivibratoire (20) étant fixé à ladite deuxième zone (54).

8. Siège selon la revendication 7,
**caractérisé en ce que**, ladite poutre (51) étant de plus un moyen de liaison (40) dudit moyen d'inhibition (30) à ladite deuxième extrémité (12), ledit moyen d'inhibition (30) est fixé à ladite deuxième zone (54) de la poutre (51).

9. Siège selon l'une quelconque des revendications précédentes,
**caractérisé en ce que**, ledit moyen d'inhibition (30) comporte un enrouleur (38) qui coopère avec un lien (41) d'un moyen de liaison (40), ledit moyen d'inhibition (30) comprend un moyen de blocage (36) dudit enrouleur (38) lorsque le baquet subit une accélération supérieure à un seuil prédéterminé en se rapprochant du plancher.

10. Procédé pour protéger un individu assis sur un siège (1) selon l'une quelconque des revendications précédentes contre des vibrations et des chocs, ledit siège comprenant un baquet (2) et un châssis (6) fixé à un plancher (9) pour porter ledit baquet (2), ledit baquet (2) étant pourvu d'une assise (3) et d'un dossier (4) pour accueillir un individu, ledit siège (1) comprenant un moyen d'absorption d'énergie (10) de crash et un moyen antivibratoire (20), ledit moyen d'absorption d'énergie (10) comportant une première extrémité (11) fixée au baquet (2) et une deuxième extrémité (12) mobile par rapport audit châssis (6),
au cours duquel on active le moyen antivibratoire (20) en fonctionnement normal et on inhibe ledit moyen antivibratoire (20) en bloquant ladite deuxième extrémité lorsque le baquet (2) dudit siège (1) subit une accélération supérieure à un seuil prédéterminé en se rapprochant du plancher afin de laisser agir uniquement un moyen d'absorption d'énergie de crash.

## Claims

1. An anti-crash seat (1) of a vehicle, comprising a seat pan (2) and a framework (6) which is fixed to a floor (9) for bearing said seat pan (2), said seat pan (2) being provided with a bed (3) and with a backrest (4) for accommodating an individual, said seat (1) comprises a crash energy absorption means (10) and an anti-vibration means (20),
**characterised in that** it comprises a means for inhibition (30) of said anti-vibration means (20) which neutralises the anti-vibration means when the seat pan (2) undergoes an acceleration greater than a predetermined threshold when approaching the floor (9), said energy absorption means (10) comprises a first end (11) which is fixed to the seat pan (2) and a second end (12) which is mobile relative to said framework (6), said inhibition means (30) is connected to said second end (12) by a linking means (40) for blocking this second end (12) when the seat pan (2) undergoes an acceleration greater than said predetermined threshold when approaching the floor.

2. A seat according to Claim 1,
**characterised in that** said anti-vibration means (20) is fixed on one hand to the seat pan (2) and on the other hand to a member (9, 6) which is fixed with respect to this seat pan.

3. A seat according to Claim 1,
**characterised in that** said second end (12) is suspended from a link (41) of the linking means (40), said link (41) linking the second end (12) to the inhibition means (30).

4. A seat [according to] Claim 1,
**characterised in that** said anti-vibration means (20) is on one hand fixed to a member (9, 6) which is fixed relative to the seat pan (2) and on the other hand is linked to a second end (12) of the energy absorption means (10).

5. A seat according to Claim 4,
**characterised in that** said anti-vibration means (20) is equally well connected directly to the second end (12) or connected indirectly to this second end (12) by a connection means (50).

6. A seat according to any one of Claims 4 to 5,
**characterised in that** said anti-vibration means (20) is an anti-vibration means which is under torsional stress (21), arranged on said framework (6) and connected to the second end (12).

7. A seat according to any one of Claims 4 to 5,
**characterised in that** said anti-vibration means (20) is on one hand fixed to a member (9, 6) which is fixed relative to the seat pan (2) and on the other hand is connected to said second end (12) by a tilting beam (51) of a connection means (50), which beam is articulated to the framework (6) by an articulation (52), said articulation (52) being arranged between a first zone (53) of the beam (51) and a second zone (54) of the beam (51), said second end (12) being fixed to said first zone (53), and said anti-vibration means (20) being fixed to said second zone (54).

8. A seat according to Claim 7,
**characterised in that**, said beam (51) furthermore being a means (40) for linking said inhibition means (30) to said second end (12), said inhibition means (30) is fixed to said second zone (54) of the beam (51).

9. A seat according to any one of the preceding claims,
**characterised in that** said inhibition means (30) comprises a winder (38) which cooperates with a link (41) of a linking means (40), said inhibition means (30) comprises a means for blocking (36) said winder (38) when the seat pan undergoes an acceleration greater than a predetermined threshold when approaching the floor.

10. A method for protecting an individual sitting on a seat (1) according to any one of the preceding claims against vibrations and impacts, said seat comprising a seat pan (2) and a framework (6) which is fixed to a floor (9) for bearing said seat pan (2), said seat pan (2) being provided with a bed (3) and with a backrest (4) for accommodating an individual, said seat (1) comprising a crash energy absorption means (10) and an anti-vibration means (20), said energy absorption means (10) comprising a first end (11) which is fixed to the seat pan (2) and a second end (12) which is mobile relative to said framework (6),
during which the anti-vibration means (20) is activated in normal operation and said anti-vibration means (20) is inhibited by blocking said second end when the seat pan (2) of said seat (1) undergoes an acceleration greater than a predetermined threshold when approaching the floor, in order to allow solely a crash energy absorption means to act.

## Patentansprüche

1. Anti-Crash-Sitz (1) eines Fahrzeugs mit einem Schalensitz (2) und einem an einem Boden (9) befestigten Gestell (6), welches den Schalensitz (2) trägt, wobei der Schalensitz (2) mit einer Sitzfläche (2) und einer Rückenlehne (4) versehen ist, um eine Person aufzunehmen, wobei der Sitz (1) ein Mittel zur Absorption von Crash-Energie (10) und ein Antivibrationsmittel (20) aufweist,
**gekennzeichnet durch** ein Hemmungsmittel (30) des Antivibrationsmittels (20), welches das Antivibrationsmittel neutralisiert, wenn der Schalensitz (2) eine Beschleunigung während einer Annäherung an den Boden (9) erfährt, die größer ist als ein vorbestimmter Schwellenwert, wobei das Mittel zur Absorption von Energie (10) ein erstes Ende (11) aufweist, welches an dem Schalensitz (2) befestigt ist, und ein zweites Ende (12), welches im Verhältnis zu dem Gestell (6) beweglich ist, wobei das Hemmungsmittel (30) über ein Verbindungsglied (40) mit dem zweiten Ende (12) verbunden ist, um dieses zweite Ende (12) zu blockieren, wenn der Schalensitz (2) eine Beschleunigung bei einer Annäherung an den Boden erfährt, die größer ist als der vorbestimmte Schwellenwert.

2. Sitz nach Anspruch 1,
**dadurch gekennzeichnet, dass** das Antivibrationsmittel (20) einerseits am Schalensitz (2) und andererseits an einem relativ zu diesem Schalensitz festen Organ (9, 6) befestigt ist.

3. Sitz nach Anspruch 1,
**dadurch gekennzeichnet, dass** das zweite Ende (12) an einer Verbindung (41) des Verbindungsmittels (40) aufgehängt ist, wobei die Verbindung (41) das zweite Ende (12) mit dem Hemmungsmittel (30) verbindet.

4. Sitz nach Anspruch 1,
**dadurch gekennzeichnet, dass** das Antivibrationsmittel (20) einerseits an einem relativ zum Schalensitz (2) feststehenden Organ (9, 6) befestigt ist, und andererseits mit einem zweiten Ende (12) des Mittels zur Absorption von Energie (10) befestigt ist.

5. Sitz nach Anspruch 4,
**dadurch gekennzeichnet, dass** das Antivibrationsmittel (20) gleichermaßen direkt mit dem zweiten Ende (12) verbunden ist, oder indirekt über ein Verbindungsmittel (50) mit diesem zweiten Ende (12) verbunden ist.

6. Sitz nach einem der Ansprüche 4 oder 5,
**dadurch gekennzeichnet, dass**
das Antivibrationsmittel (20) ein torsionsbeanspruchtes Antivibrationsmittel (21) ist, welches auf dem Gestell (6) angeordnet und mit dem zweiten Ende (12) verbunden ist.

7. Sitz nach einem der Ansprüche 4 oder 5,
**dadurch gekennzeichnet, dass** das Antivibrationsmittel (20) einerseits an einem relativ zum Schalensitz (2) feststehenden Organ (9, 6) befestigt ist und andererseits mit dem zweiten Ende (12) über einen Schwingbalken (51) eines Verbindungsmittels (50) verbunden ist, welches mit einem Gelenk (52) an dem Gestell (6) angelenkt ist, wobei das Gelenk (52) zwischen einem ersten Bereich (53) des Balkens (51) und einem zweiten Bereich (54) des Balkens (51) angeordnet ist, wobei das zweite Ende (12) an dem ersten Bereich (53) befestigt ist, und das Antivibrationsmittel (20) an dem zweiten Bereich (54) befestigt ist.

8. Sitz nach Anspruch 7,
**dadurch gekennzeichnet, dass** der Balken (51) außerdem ein Verbindungsmittel (40) des Hemmungsmittels (30) mit dem zweiten Ende (12) ist, wobei das Hemmungsmittel (30) an dem zweiten Bereich (54) des Balkens (51) befestigt ist.

9. Sitz nach einem der vorstehenden Ansprüche,
**dadurch gekennzeichnet, dass** das Hemmungsmittel (30) eine Aufrollvorrichtung (38) aufweist, die mit einer Verbindung (41) eines Verbindungsmittels (40) zusammenwirkt, wobei das Hemmungsmittel (30) ein Mittel (36) aufweist zur Blockierung der Aufrollvorrichtung (38), wenn der Schalensitz während seiner Annäherung an den Boden eine Beschleunigung erfährt, die größer ist als ein vorbestimmter Schwellenwert.

10. Verfahren zum Schutz einer auf einem Sitz (1) nach einem der vorstehenden Ansprüche sitzenden Person gegen Vibrationen und Stöße, wobei der Sitz einen Schalensitz (2) und ein an einem Boden (9) befestigtes Gestell (6), welches den Schalensitz (2) trägt, aufweist, wobei der Schalensitz (2) mit einer Sitzfläche (3) und einer Rückenlehne (4) zum Aufnehmen einer Person ausgerüstet ist, wobei der Sitz (1) ein Mittel zur Absorption von Crash-Energie (10) und ein Antivibrationsmittel (20) aufweist, wobei das Energieabsorptionsmittel (10) ein erstes am Schalensitz (2) befestigtes Ende (11) und ein zweites bezüglich des Gestells (6) bewegliches Ende (12) aufweist,
währenddessen das Antivibrationsmittel (20) in Normalbetrieb aktiviert ist und es gehemmt ist, indem das zweite Ende blockiert wird, wenn der Schalensitz (2) des Sitzes (1) während einer Annäherung an den Boden eine Beschleunigung erfährt, die größer ist als ein vorbestimmter Schwellenwert, um ausschließlich ein Mittel zur Absorption von Crash-Energie wirken zu lassen.
